**Europäisches Patentamt**

**European Patent Office**

**Office européen des brevets**

(19)

(11) veröffentlichungsnummer: **0 016 367**
**A1**

(12) # EUROPÄISCHE PATENTANMELDUNG

(21) Anmeldenummer: **80101058.8**

(22) Anmeldetag: **03.03.80**

(51) Int. Cl.³: **H 02 G 3/22**
**H 01 R 4/64, H 01 R 13/24**

(30) Priorität: **14.03.79 DE 2909890**

(43) Veröffentlichungstag der Anmeldung:
**01.10.80 Patentblatt 80/20**

(84) Benannte Vertragsstaaten:
**AT BE CH FR GB IT NL SE**

(71) Anmelder: **System- & Verfahrenstechnik
Verwaltungsgesellschaft mbH.
Maschener Schützenstrasse 45
D-2105 Seevetal 3(DE)**

(72) Erfinder: **Buch, Jürgen
Maschener Schützenstrasse 45
D-2105 Seevetal 3(DE)**

(74) Vertreter: **Schmidt-Bogatzky, Jürgen, Dr.-Ing.
Neuer Wall 10 II
D-2000 Hamburg 36(DE)**

(54) **Verfahren zur Abschirmung hochfrequenter elektrischer und elektromagnetischer Wellen bei dichten Durchführungen für Leitungsbündel durch eine Wand und Vorrichtung zur Durchführung des Verfahrens.**

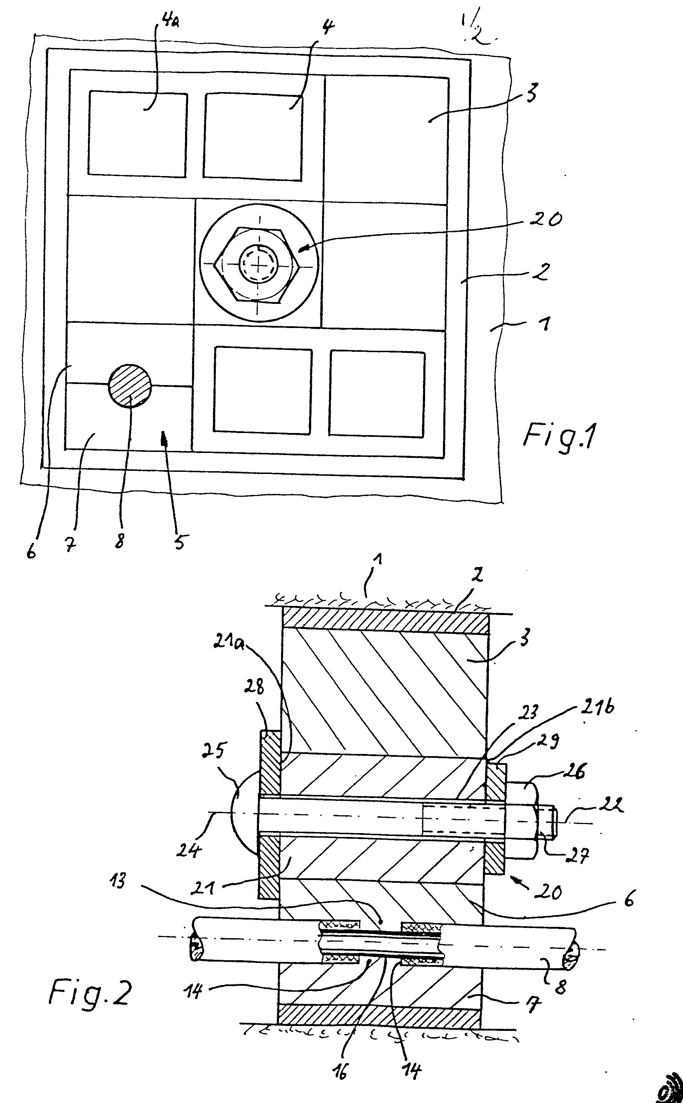

(57) Die Durchführung zur Abschirmung hochfrequenter elektrischer und elektromagnetischer Wellen besteht aus einem an sich bekannten druckfesten Rahmen (2), in dem der freie Raum zwischen den einzelnen Leitungen (8) und dem Rahmen (2) durch baukastenartig über- und nebeneinanderliegende ganz oder teilweise elastische Paßstücke (5) vollständig ausgefüllt ist, von denen eine der Zahl der Leitungen (8) entsprechende Anzahl aus jeweils zwei Teilen besteht. Diese sind mit von ihren Berührungsflächen ausgehenden, dem Querschnitt jeweils einer Leitung (8) nach Form und Größe angepaßten Ausnehmungen (9,10) versehen und stehen mit den übrigen Paßstücken (5) unter in der Rahmenebene wirkendem Druck, durch den sie miteinander mit den Leitungen (8) und mit der Rahmenwand in dichter Anlage gehalten werden. An den durch den Rahmen (2) zu führenden Leitungen (8) wird im Bereich der Rahmenebene in dem Mantel der Leitungen (8) eine umlaufende Nut (14) ausgebildet, die sich bis auf den Abschirmmantel (16) der Leitung (8) erstreckt und die zur Aufnahme eines in den Ausnehmungen (9,10) der Paßstücke (5) ausgebildeten Steges (12,13) dienen. Dann wird jede Leitung (8) in zwei Paßstückhälften (6,7) eines Paßstücks (5) eingelegt. Die Paßstücke (5) mit den Leitungen (8) und gegebenenfalls zusätzlichen Nullstücken (3,4) werden dann in die Rahmenöffnung diese verfüllend eingelegt. Durch Verformung werden danach Paßstücke (5) und Nullstücke (3,4) derart gegeneinander und gegen den Rahmen (2) gepreßt, daß in dem elastischen, bei Hitzeeinwirkung quellfähigen Material eingelagerte, für sich elektrisch leitfähige Partikel derart zueinander verschoben werden, daß die Paßstücke (5) und Nullstücke (3,4) über ihren gesamten Querschnitt elektrisch leitfähig und wasser-, gas- und feuerdicht sind (Fig. 2).

**EP 0 016 367 A1**

Croydon Printing Company Ltd.

./...

Fig.2

Die Erfindung betrifft ein Verfahren zur Abschirmung hochfrequenter elektrischer und elektromagnetischer Wellen von Leitungen und Leitungsbündel, die durch eine dichte Durchführung durch eine Wand geführt werden, die aus einem an der Durchgangsstelle der Wand zu befestigenden druckfesten Rahmen bestehen, in dem der freie Raum zwischen den einzelnen Leitungen des Bündels und dem Rahmen durch baukastenartig über- und nebeneinanderliegende ganz oder teilweise elastische Paßstücke vollständig ausgefüllt ist, von denen eine der Zahl der Leitungen entsprechende Anzahl aus jeweils zwei Teilen besteht, die mit von ihren Berührungsflächen ausgehenden, dem Querschnitt jeweils einer Leitung nach Form und Größe angepaßten Ausnehmungen versehen sind und mit den übrigen Paßstücken unter in der Rahmenebene wirkenden Druck stehen, durch den sie miteinander mit den Leitungen und mit der Rahmeninnenwand in dichter Anlage gehalten werden und eine Vorrichtung zur Durchführung des Verfahrens.

Sofern bei den bekannten gattungsgemäßen Durchführungen eine Abschirmung der Leitungen gegen hochfrequente elektrische oder elektromagnetische Wellen im Bereich der Durchführung erfolgen soll, ist es erforderlich, die Metallabschirmung der Leitungen mit einer Metallplatte aus vorzugsweise Kupfer zu verbinden, die den Rahmen abdeckt und mit diesem verbunden wird. Dieses bedingt eine arbeitsaufwendige Montage.

Sofern die durch den Rahmen geführten Leitungen erneuert oder ergänzt werden sollen, ist es stets erforderlich, die Verbindung zwischen Rahmen und Metallplatte und Metallplatte und Leitungen wieder aufzutrennen. Nach Einbringen der neuen Leitungen muß dann die zugehörige Metallplatte wieder dicht mit den Abschirmungen der Leitungen und mit
dem Rahmen der Durchführung verbunden werden.

Die Aufgabe der Erfindung besteht darin, ein Verfahren und
eine Vorrichtung zu dessen Durchführung zu schaffen, die
es ermöglicht, daß auch bei hohem Druck und Brand sowie
trotz einfacher Auswechselbarkeit der einzusetzenden Leitungen stets eine einwandfreie Dichthaltung der Durchführung bei gleichzeitiger völliger Abschirmung gegen hochfrequente elektrische oder elektromagnetische Wellen gewährleistet ist, ohne daß besondere feste Lötverbindungen erforderlich sind.

Erfindungsgemäß erfolgt die Lösung der Aufgabe dadurch,
daß an den durch den Rahmen zu führenden Leitungen im Bereich der Rahmenebene in dem Mantel der Leitungen eine umlaufende bis auf die Metallabschirmung sich erstreckende
Nut ausgebildet wird, dann jede Leitung in zwei Paßstücke
mit den Leitungen und gegebenenfalls zusätzlichen Nullstücken in die Rahmenöffnung diese verfüllend eingelegt
werden und dann die Paßstücke und Nullstücke durch Verformung gegeneinander und gegen den Rahmen gepreßt werden,
daß in dem elastischen, bei Hitzeeinwirkung quellfähigen
Material der Paßstücke und Nullstücke eingelagerte, für
sich elektrisch leitfähige Partikel derart zueinander verschoben werden, daß die Nullstücke und Paßstücke über ihren
gesamten Querschnitt elektrisch leitfähig sind. Nach einem
weiteren Merkmal der Erfindung erfolgt die Anwendung des
Verfahrens durch eine Vorrichtung, bei der in der Rahmenebene Paßstücke mit jeweils einem Kabel, Preßstücke und
gegebenenfalls Nullstücke angeordnet sind, die aus einem
elastischen Material bestehen, in das elektrisch leitfähige Metallpartikel eingelagert sind und die gegeneinander
und gegen die innere Wandung des Rahmens preßbar sind.

Weitere Merkmale der Erfindung werden in den Unteransprüchen beschrieben und anhand des in den Zeichnungen dargestellten Ausführungsbeispieles näher erläutert. Es zeigt

Fig. 1 die erfindungsgemäße Vorrichtung in einer Ansicht von vorn,

Fig. 2 die Vorrichtung nach Fig. 2 in einer Seitenansicht im Schnitt,

Fig. 3 eine Paßstückhälfte der Vorrichtung nach Fig. 1 mit einer Leitung in einer vergrößerten Draufsicht im Schnitt,

Fig. 4 das Paßstück nach Fig. 1 in einer vergrößerten Seitenansicht im Schnitt,

Fig. 5 das Paßstück nach Fig. 4 in einer Voransicht im Schnitt A-A nach Fig. 3.

In Fig. 1 ist ein Rahmen 2 dargestellt, der in eine Durchbrechung in einer Wand 1 eingesetzt ist. In dem Rahmen sind modulartig Nullstücke 3, 4, ein Paßstück 5 sowie ein Preßstück 20 angeordnet. Die Nullstücke 4 sind als Mehrkammernullstücke ausgebildet. Sie sind doppelt so breit wie ein einfaches Nullstück 3 und weisen jeweils zwei Ausnehmungen 4a auf, die durch einen Quersteg voneinander distanziert sind. Das Paßstück 5 besteht aus zwei Paßstückhälften 6, 7, die eine Leitung 8 umfassen.

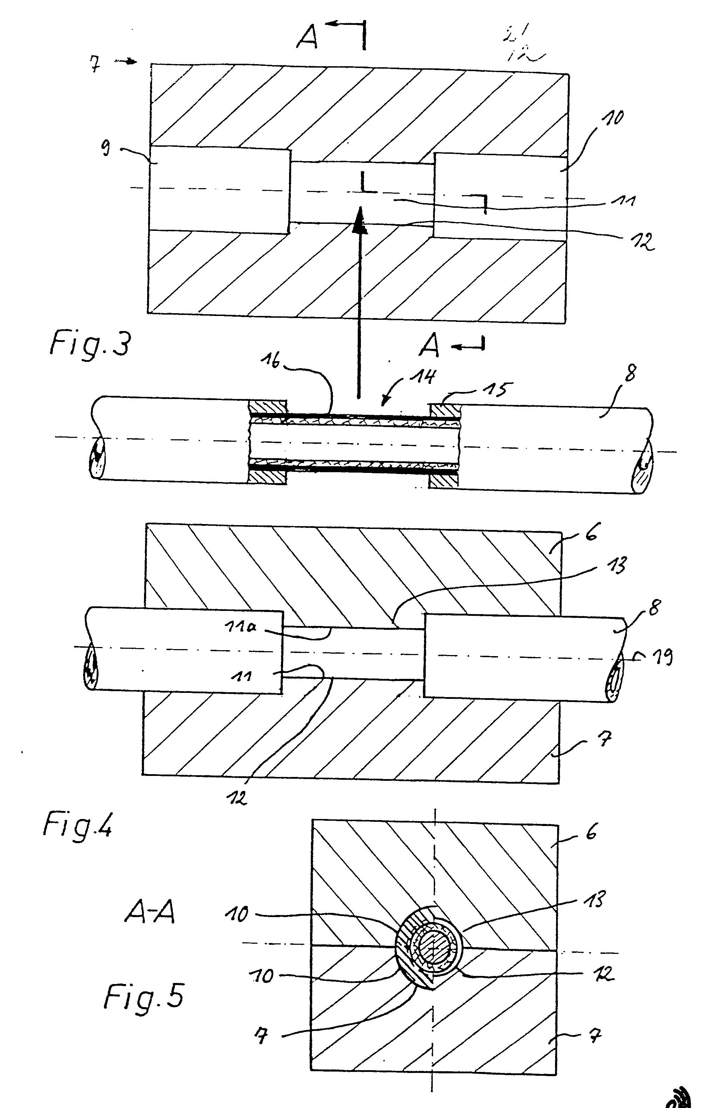

Wie in den Fig. 3 bis 5 näher dargestellt, ist jedes Paßstück 5 so ausgebildet, daß es einen direkten mechanischen Kontakt mit dem Abschirmmantel 16 einer Leitung 8 ermöglicht. Da die Paßstücke 5 ebenso wie die Klemmstücke der Preßstücke 20 und die Nullstücke 3, 4 aus einem elastischen, bei Hitzeeinwirkung quellfähigem Material bestehen, in das elektrisch leitende Metallpartikel eingelagert sind, kann durch Verformung der Paßstücke 5, Preßstücke 20 und Nullstücke 3, 4 gegeneinander und gegen die Innenwand des Rahmens 2 eine durchgehende HF-Abschirmung erzielt werden.

Wesentlich hierfür ist, daß das Material der Paßstücke 5, Preßstücke 20 und Nullstücke 3, 4 im unverformten Zustand nur ungenügend leitfähig ist, aber bei Verformung durch Verschiebung der eingelagerten, leitfähigen Metallpartikel eine über den jeweiligen Querschnitt sich erstreckende Leitfähigkeit erlangt. Hierdurch wird gleichzeitig mit einer Abdichtung der Durchführung gegen Feuer, Gas und Wasser eine HF-Abschirmung erzielt.

Jedes Paßstück 5 besteht aus zwei Paßstückhälften 6, 7, in denen koaxial zur Mittelachse 19 jeweils zwei halbkreisförmige Ausnehmungen 9, 10 ausgebildet sind. Die Radien dieser Ausnehmungen 9, 10 entsprechen dem äußeren Radius der einzulagernden Leitung 8. Zwischen den Ausnehmungen 9, 10 ist in jeder Paßstückhälfte 6, 7 ein vorkragender halbkreisförmiger Steg 12, 13 ausgebildet. Die stirnseitige Fläche 11, 11a dieser Stege 12, 13 kommt bei in das Paßstück 5 eingelagerter Leitung 8 auf dem Abschirmmantel 16 der Leitung 8 zur Anlage. Hierzu ist in dem Mantel der Leitung 8 eine umlaufende, sich bis zum Abschirmmantel 16 erstreckende Nut 14 ausgebildet, in die die Stege 12, 13 einführbar sind. Vorzugsweise ist die Länge der Ausnehmungen 9, 10 und der stirnseitigen Flächen 11, 11a jeweils gleich.

Das Preßstück 20 ist in Fig. 2 dargestellt. Es besteht aus einem, dem Modul der Paßstücke 5 entsprechenden quaderförmigen Klemmstück 21 aus elastischem, bei Hitzeeinwirkung quellendem Werkstoff, in dem elektrisch leitfähige Metallpartikel eingelagert sind. Koaxial zur Mittelachse 22 ist eine Durchbrechung 23 ausgebildet, durch die ein Schraubbolzen 24 geführt ist, zwischen dessen Kopf 25 und der einen stirnseitigen Endfläche 21a des Klemmstückes 21 eine Anpreßplatte 28 angeordnet ist. Die Anpreßplatte 28 kann mit dem Kopf 25 durch Schweißung od. dgl. verbunden sein. Zwischen der Mutter 26 und der anderen stirnseitigen Endfläche 21b des Klemmstückes 21 ist ebenfalls eine Anpreßplatte 29 angeordnet. Vorzugsweise überragt die Anpreßplatte 28

0016367

die äußere Begrenzungsfläche des Klemmstückes 21. Zum Verpressen der in dem Rahmen 2 befindlichen Nullstücke 3, Paßstücke 5 und Mehrkammernullstücke 4 wird das Preßstück 20 in die Rahmenebene eingeführt. Danach werden durch Betätigung der Schraube 26 die Anpreßplatten 28, 29 aufeinander zugezogen, so daß das Klemmstück 21 verformt wird und durch radiale Ausdehnung des Klemmstückes 21 eine Verpressung der im Rahmen befindlichen Paßstücke 5, Nullstücke 3 und Mehrkammernullstücke 4 erfolgt. Diese Verpressung wird hierbei noch dadurch begünstigt, daß die Anpreßplatte 28 auch an den zum Klemmstück 21 unmittelbar benachbarten Teilen zur Anlage kommt. Es ist auch möglich, statt einer Verformung des Klemmstückes 21 durch Aufeinanderziehen der Anpreßplatten 28, 29 in die Durchbrechung 23 mittels des Schraubbolzens kegelstumpfförmige Spannstücke einzuführen, durch die das Klemmstück 21 auseinandergepreßt wird.

Patentansprüche

1. Verfahren zur Abschirmung hochfrequenter elektrischer und elektromagnetischer Wellen bei dichten Durchführungen für Leitungsbündel durch eine Wand, die aus einem an der Durchgangsstelle der Wand zu befestigenden druckfesten Rahmen bestehen, in dem der freie Raum zwischen den einzelnen Leitungen des Bündels und dem Rahmen durch baukastenartig über- und nebeneinanderliegende ganz oder teilweise elastische Paßstücke vollständig ausgefüllt ist, von denen eine der Zahl der Leitungen entsprechende Anzahl aus jeweils zwei Teilen besteht, die mit von ihren Berührungsflächen ausgehenden, dem Querschnitt jeweils einer Leitung nach Form und Größe angepaßte Ausnehmungen versehen sind und mit den übrigen Paßstücken unter in der Rahmenebene wirkenden Druck stehen, durch den sie miteinander mit den Leitungen und mit der Rahmenwand in dichter Anlage gehalten werden, dadurch gekennzeichnet, daß an den durch den Rahmen zu führenden Leitungen im Bereich der Rahmenebene in dem Mantel der Leitungen eine umlaufende bis auf die Metallabschirmung sich erstreckende Nut ausgebildet wird, dann jede Leitung in zwei Paßstückhälften eines Paßstückes eingelegt wird und dann die Paßstücke mit den Leitungen und gegebenenfalls zusätzlichen Nullstücken in die Rahmenöffnung diese verfüllend eingelegt werden und dann die Paßstücke und Nullstücke durch Verformung gegeneinander und gegen den Rahmen derart gepreßt werden, daß in dem elastischen, bei Hitzeeinwirkung quellfähigen Material der Paßstücke und Nullstücke eingelagerte, für sich elektrisch leitfähige Partikel derart zueinander verschoben werden, daß die Paßstücke und Nullstücke über ihren gesamten Querschnitt elektrisch leitfähig und wasser-, gas- und feuerdicht sind.

2. Verfahren nach Anspruch 1, dadurch gekennzeichnet, daß die Paßstücke und Nullstücke mit einem oder mehreren Preßstücken verformt werden, deren Klemmstücke ebenfalls aus elastischem, bei Hitzeeinwirkung quellfähigem Material bestehen, in das elektrisch leitfähige Partikel eingelagert sind, die bei einer Verformung des Klemmstückes eine elektrische Leitfähigkeit über den Querschnitt des Klemmstückes bewirken.

3. Verfahren nach Anspruch 1 und 2, dadurch gekennzeichnet, daß die Nullstücke, Paßstücke und Klemmstücke aus einem Silicon-Kautschuk, Neoprene-Kautschuk od. dgl. bestehen.

4. Verfahren nach Anspruch 1 bis 3, dadurch gekennzeichnet, daß in das Material der Nullstücke, Paßstücke und Klemmstücke Metallpartikel eingelagert sind.

5. Verfahren nach Anspruch 4, dadurch gekennzeichnet, daß die Metallpartikel aus Aluminium bestehen.

6. Vorrichtung zur Herstellung einer dichten Durchführung für Leitungsbündel durch eine Wand, mit einem Modulsatz von in einem Rahmen verformbaren Paßstücken und Nullstücken aus einem elastischen Werkstoff, der bei Hitzeeinwirkung quillt und einer Einrichtung zur Abschirmung von hochfrequenten elektrischen oder elektromagnetischen Wellen, zur Durchführung des Verfahrens nach Anspruch 1 bis 5, dadurch gekennzeichnet, daß in der Rahmenebene Paßstücke (5) mit jeweils einem Kabel (8), Preßstücke (20) und gegebenenfalls Nullstücke (3, 4) angeordnet sind, die aus einem elastischen Material bestehen, in das elektrisch leitfähige Metallpartikel eingelagert sind und die gegeneinander und gegen die innere Wandung des Rahmens (2) preßbar sind.

7. Vorrichtung nach Anspruch 6, dadurch gekennzeichnet, daß das Paßstück (5) aus zwei Paßstückhälften (6, 7) besteht, in denen koaxial zur Mittelachse (19) jeweils zwei halbkreisförmige Ausnehmungen (9, 10) ausgebildet sind, deren Radien dem äußeren Radius einer einzulagernden Leitung (8) entspricht, und zwischen denen ein vorkragender halbkreisförmiger Steg (12, 13) ausgebildet ist, dessen stirnseitige Fläche (11) an dem Abschirmmantel (16) der Leitung (8) zur Anlage bringbar sind, in der eine den Stegen (12, 13) zugeordnete umlaufende Nut (14) ausgebildet ist, in die die Stege (12, 13) einführbar sind.

8. Vorrichtung nach Anspruch 6 und 7, dadurch gekennzeichnet, daß das Preßstück (20) aus einem dem Modul der Paßstücke (5) und Nullstücke (3, 4) entsprechenden quaderförmigen Klemmstück (21) besteht, in dessen elastischem, bei Hitzeeinwirkung quellfähigem Werkstoff elektrisch leitende Metallpartikel eingelagert sind, und in dem koaxial zur Mittelachse (22) eine Durchbrechung (23) ausgebildet ist, durch die ein Schraubenbolzen (24) geführt ist, mittels dem zwei Anpreßplatten (28, 29) auf die Stirnseiten der Klemmstücke (21) preßbar sind.

9. Vorrichtung nach Anspruch 6 bis 8, dadurch gekennzeichnet, daß das Nullstück (4) als Mehrkammernullstück ausgebildet ist, dessen Querschnitt in Leitungsdurchgangsrichtung ein Mehrfaches des Querschnittes eines Nullstückes (3) umfaßt und in dem voneinander durch Stege distanzierte Ausnehmungen (4a) ausgebildet sind.

10. Vorrichtung nach Anspruch 8, dadurch gekennzeichnet, daß in der Durchbrechung (23) des Klemmstückes (21) in an sich bekannter Weise kegelstumpfförmige Spannstücke mittels eines Schraubbolzens einpreßbar sind.

Fig.1

Fig.2

Fig.3

Fig.4

A-A

Fig.5

0016367

| Kategorie | EINSCHLÄGIGE DOKUMENTE | | KLASSIFIKATION DER ANMELDUNG (Int.Cl.³) |
|---|---|---|---|
| | Kennzeichnung des Dokuments mit Angabe, soweit erforderlich, der maßgeblichen Teile | betrifft Anspruch | |
| | US - A - 3 057 951 (BLAKELY) <br><br> * Spalte 1, Zeilen 36-42; Spalte 2, Zeilen 6-19, 37-41; Spalte 3, Zeilen 16-39 * <br><br> -- | 1-3,6, 8 | H 02 G 3/22 <br> H 01 F 4/64 <br> 13/24 |
| | GB - A - 1 049 621 (BRATTBERG) <br><br> * Seite 2, Zeilen 71-118; Seite 3, Zeilen 23-27, 118-120; Seite 7, Zeilen 52-90 * <br><br> -- | 1-3,6, 7,9,10 | |
| | US - A - 3 976 825 (ANDERBERG) <br><br> * Spalte 1, Zeilen 13-26; Spalte 4, Zeilen 18-36, 44-52; Spalte 5, Zeilen 16-28 * <br><br> -- | 1,2,6, 7 | **RECHERCHIERTE SACHGEBIETE (Int. Cl.³)** <br><br> H 02 G 3/22 <br> H 01 R 4/64 <br> 13/24 <br> F 16 L 5/02 <br> 25/00 <br> H 01 B 17/30 <br> H 02 G 3/26 |
| | CH - A - 373 083 (BLANCHET) <br><br> * Seite 2, Zeilen 7-40; Seite 3, Zeilen 47-66; Seite 4, Zeilen 39-54 * <br><br> -- | 1,6 | |
| | US - A - 4 011 360 (WALSH) <br><br> * Spalte 1, Zeilen 66-68; Spalte 2, Zeilen 1-7 * <br><br> -- | 1,6 | **KATEGORIE DER GENANNTEN DOKUMENTE** |
| | US - A - 4 051 323 (CHURLA) <br><br> * Spalte 1, Zeilen 8-10; Spalte 3, Zeilen 10-16 * <br><br> -- <br><br> ./. | 1,7 <br><br><br><br> 2,4,5 | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus anderen Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 28-05-1980 | TIELEMANS |

EPA form 1503.1 06.78

**Europäisches Patentamt**

**EUROPÄISCHER RECHERCHENBERICHT**

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | FR - A - 2 286 160 (EATON) <br> * Seite 1, Zeilen 1-10; Seite 5, Zeilen 9-18; Seite 10, Zeilen 18-31; Figur 13 * <br><br> ---- | 2,4,5 | |
| | | | **RECHERCHIERTE SACHGEBIETE (Int. Cl. 3)** |

EPA Form 1503.2 06.78